# EUROPEAN PATENT SPECIFICATION

(11) **EP 2 419 472 B1**
(45) Date of publication and mention of the grant of the patent: **02.04.2014**
(21) Application number: 09843448.3
(22) Date of filing: 15.04.2009
(51) Int. Cl.: C08G 65/48, C08G 65/26, C08G 65/30, C08G 65/32, C08G 65/00, C08L 71/00

(54) **COPOLYETHER GLYCOL MANUFACTURING PROCESS**
VERFAHREN ZUR HERSTELLUNG VON COPOLYETHERGLYKOLEN
PROCÉDÉ DE FABRICATION DE COPOLYÉTHER GLYCOL

(43) Date of publication of application: 22.02.2012
(73) Proprietor: Invista Technologies S.à.r.l., 9000 St. Gallen (CH)
(72) Inventor: SUN, Qun, Wilmington DE 19808-1106 (US); ORLANDI, Robert, D., Landenberg PA 19350-0513 (US)
(74) Representative: Cockerton, Bruce Roger
(86) International application number: PCT/US2009/040647
(87) International publication number: WO 2010/120291

(56) References cited:
- EP-A1- 0 004 273
- EP-A1- 0 004 536
- EP-A1- 0 006 107
- EP-A2- 0 151 766
- WO-A1-03/059989
- WO-A1-2007/061446
- GB-A- 854 958
- US-A- 4 224 432
- US-A1- 4 952 673
- US-A1- 2007 117 949

## Description

### FIELD OF THE INVENTION

The present invention relates to a continuous process for manufacturing copolyether glycols by polymerization of a reaction mixture comprising tetrahydrofuran and a high concentration of at least one alkylene oxide in the presence of an acid catalyst, at least one compound containing reactive hydrogen atoms, and a specific diluent or solvent. More particularly, the invention relates to a diluent or solvent-assisted continuous polymerization process for manufacturing copolyether glycols with a high molar incorporation of alkylene oxide. Also described are copolyether glycols having a high molar incorporation of alkylene oxide manufactured in a diluent or solvent -assisted continuous polymerization process.

### BACKGROUND OF THE INVENTION

Homopolymers of tetrahydrofuran (THF), also known as polytetramethylene ether glycols (PTMEG), are well known for use as soft segments in polyurethanes and other elastomers. These homopolymers impart superior dynamic properties to polyurethane elastomers and fibers. Copolymers of THF and at least one cyclic ether, also known as copolyether glycols, are known for use in similar applications, particularly where the reduced crystallinity imparted by the cyclic ether may improve certain dynamic properties of a polyurethane which contains such a copolymer as a soft segment. Among the cyclic ethers used for this purpose are ethylene oxide and propylene oxide. Copolyether glycols having a high molar incorporation of alkylene oxide, for example at least about 50 mol %, are desirable for higher polarity and hydrophilicity as well as improved dynamic properties, for example low temperature flexibility due to further lower crystallinity, of a polyurethane which contains such a copolymer as a soft segment.

Copolymers of THF and cyclic ether having normal molar incorporations of alkylene oxide, such as for example, from about 28 to about 49 mol %, e.g. from about 30 to about 45 mol %, are well known in the art. Their preparation is disclosed, for example, by Pruckmayr in U.S. Pat. No. 4,139,567 and U.S. Pat. No. 4,153,786. Such copolymers can be prepared by any of the known methods of cyclic ether polymerization, described for instance in "Polytetrahydrofuran" by P. Dreyfuss (Gordon & Breach, N.Y. 1982). Such polymerization methods include catalysis by strong proton or Lewis acids, by heteropoly acids, as well as by perfluorosulfonic acids or acid resins. In some instances it may be advantageous to use a polymerization promoter, such as a carboxylic acid anhydride, as disclosed in U.S. Pat. No. 4,163,115. In these cases the primary polymer products are diesters, which need to be hydrolyzed in a subsequent step to obtain the desired polyether glycols.

Other methods for manufacture of copolyether glycols having normal molar incorporations of alkylene oxide are known in the art, such as for example as shown in U.S. Pat. Nos. 4,192,943; 4,228,272; 4,564,671; and 4,585,592; and in published patent applications WO 03/076453 and WO 03/076494. For example, U.S. Pat. No. 4,564,671 discloses a process for polymerization of THF with a 1,2-alkylene oxide in the presence of a compound containing reactive hydrogen and a fixed-bed clay catalyst in which less than 30% by weight of a mixture of THF, 1,2-alkylene oxide, and a compound containing reactive hydrogen is added to the reaction mixture, which is then recycled to the reactor. U.S. Pat. No. 4,728,722 discloses such polymerization batchwise with a 1,2-alkylene oxide in the presence of compounds containing reactive hydrogen over a bleaching earth or zeolite catalyst, the 1,2-alkylene oxide being fed to the reaction mixture in such a manner that the concentration of the 1,2-alkylene oxide in the reaction mixture is kept below 2% by weight during the polymerization. U.S. Pat. No. 5,268,345 discloses polymerization of THF with ethylene oxide when montmorillonite catalyst which has been regenerated by the process disclosed therein is used. U.S. Pat. No. 4,192,943 discloses that copolyether glycol based on THF and alkylene oxides varies with the method of production. U.S Pat. No. 4,677,231 discloses use of diluent or solvent for purification of copolyether glycol having a normal molar incorporation of alkylene oxide manufactured in a polymerization process utilizing a normal concentration of alkylene oxide as a feedstock component.

None of the above publications teach the continuous production of copolyether glycols by polymerization of a reaction mixture comprising tetrahydrofuran and a very high concentration of at least one alkylene oxide in the presence of an acid catalyst, at least one compound containing reactive hydrogen atoms, and a specific diluent or solvent. None of the above publications teach the continuous production of copolyether glycols having a high incorporation, such as, for example at least about 50 mol %, of alkylene oxide. Adjusting the methods of the above publications to produce copolyether glycols by polymerization of a reaction mixture comprising tetrahydrofuran and a high concentration of at least one alkylene oxide in the presence of an acid catalyst and at least one compound containing reactive hydrogen atoms adds complexity, processing limitations, and/or cost to the manufacturing process. A simple economical process for copolymerization of a reaction mixture comprising tetrahydrofuran and a high concentration of at least one alkylene oxide in the presence of an acid catalyst and at least one compound containing reactive hydrogen atoms to produce copolyether glycol having a high molar incorporation of alkylene oxide is needed.

### SUMMARY OF THE INVENTION

Subject-matter of the present invention are processes according to claims 1-20.

The present invention provides a simple economical continuous process for the polymerization of THF and high concentrations of alkylene oxide to manufacture copolyether glycol having a high molar incorporation of alkylene oxide which minimizes or avoids high temperature and viscosity problems associated with such a process. The process comprises the steps of:
a) polymerizing from 15 to 90 parts, for example from about 15 to about 75 parts, feedstock comprising from 10 to 90 wt %, for example from about 30 to about 70 wt %, tetrahydrofuran and from 10 to 90 wt %, for example from about 20 to about 50 wt %, of at least one alkylene oxide; in the presence of from 0.1 to 5 wt %, for example from 0.1 to about 2 wt %, of at least one compound containing reactive hydrogen atoms; from greater than 10 to 40 wt %, for example from 10 to about 30 wt %, of specific diluent or solvent, hereinafter more particularly described; and an acid catalyst, hereinafter more particularly described; at a temperature of from 30 °C to 80 °C, to produce a polymerization product comprising copolyether glycol having a high molar incorporation of alkylene oxide of at least 50 mol %, a mean molecular weight of from 650 dalton to 4000 dalton and a viscosity of from 80 cP to 4000 cP; and
b) recovering from the polymerization product the copolyether glycol having a high molar incorporation of alkylene oxide, a mean molecular weight of from 650 dalton to 4000 dalton and a viscosity of from 80 cP to 4000 cP.

The present invention, therefore, provides a continuous process for manufacturing poly(tetramethylene-co-ethyleneether) glycol having a high molar incorporation of ethylene oxide, a mean molecular weight of from 650 dalton to 4000 dalton, and a viscosity of from 80 cP to 4000 cP comprising the steps of:
a) polymerizing from 15 to 90 parts, for example from 15 to about 75 parts, feedstock comprising from 10 to 90 wt %, for example from about 30 to about 70 wt %, tetrahydrofuran and from 10 to 90 wt %, for example from about 20 to about 50 wt %, of ethylene oxide; in the presence of from 0.1 to 5 wt %, for example from 0.1 to about 2 wt %, of at least one compound containing reactive hydrogen atoms; from greater than 10 to 40 wt %, for example from 10 to about 30 wt %, of specific diluent or solvent, hereinafter more particularly described; and an acid catalyst, hereinafter more particularly described; at a temperature of from 30°C to 80°C, to produce a polymerization product comprising poly(tetramethylene-co-ethyleneether) glycol having a high molar incorporation of ethylene oxide of at least 50 mol %, a mean molecular weight of from 650 dalton to 4000 dalton and a viscosity of from 80 cP to 4000 cP; and
b) recovering from the polymerization product the poly(tetramethylene-co-ethyleneether) glycol having a high molar incorporation of ethylene oxide, a mean molecular weight of from 650 dalton to 4000 dalton and a viscosity of from 80 cP to 4000 cP.

An embodiment of the present invention provides a simple economical continuous process for the copolymerization of THF and high concentrations of alkylene oxide to manufacture copolyether glycol having a high molar incorporation of alkylene oxide which minimizes or avoids high temperature and viscosity problems associated with such a process which comprises the steps of:
a') polymerizing from 15 to 90 parts, for example from 15 to about 75 parts, feedstock comprising from 10 to 90 wt %, for example from about 30 to about 70 wt %, tetrahydrofuran and from 10 to 90 wt %, for example from about 20 to about 50 wt %, of at least one alkylene oxide; in the presence of from 0.1 to 5 wt %, for example from 0.1 to about 2 wt %, of at least one compound containing reactive hydrogen atoms; from greater than 10 to 40 wt %, for example from 10 to about 30 wt %, of specific diluent or solvent, hereinafter more particularly described; and an acid catalyst, hereinafter more particularly described; at a temperature of from 30°C to 80°C, to produce a polymerization product mixture comprising copolyether glycol having a high molar incorporation of alkylene oxide of at least 50 mol %, a mean molecular weight of from 650 dalton to 4000 dalton and a viscosity of from 80 cP to 4000 cP, oligomeric cyclic ether (OCE), at least one dimer of the alkylene oxide, e.g. 1,4-dioxane, linear short chain copolyether glycol and tetrahydrofuran;
b') separating a majority of the tetrahydrofuran and the dimer of the alkylene oxide from the polymerization product mixture of step a') to produce a crude product mixture comprising OCE, copolyether glycol having a high molar incorporation of alkylene oxide of at least 50 mol %, a mean molecular weight of from 650 dalton to 4000 dalton and a viscosity of from 80 cP to 4000 cP, and linear short chain copolyether glycol;
c') separating at least a portion of the OCE and linear short chain copolyether glycol from the crude product mixture of step b') to produce an OCE stream comprising OCE and linear short chain copolyether glycol, and a product stream comprising copolyether glycol having a high molar incorporation of alkylene oxide of at least 50 mol %, a mean molecular weight of from 650 dalton to 4000 dalton and a viscosity of from 80 cP to 4000 cP;
d') recovering from the product stream of step c') the copolyether glycol having a high molar incorporation of alkylene oxide, a mean molecular weight of from 650 dalton to 4000 dalton and a viscosity of from 80 cP to 4000 cP;
e') optionally recycling at least a portion of the OCE stream of step c') to the polymerization step a'); and
f) optionally separating at least a portion of the dimer of the alkylene oxide obtained in step b') from the tetrahydrofuran obtained in step b'), and optionally recycling to polymerization step a') at least a portion of the tetrahydrofuran so obtained.

### DETAILED DESCRIPTION OF THE INVENTION

As a result of intense research in view of the above, we have discovered a continuous process whereby we can manufacture copolyether glycols having a high molar incorporation of alkylene oxide of at least 50 mol %, for example from 50 to about 85 mol %, a mean molecular weight of from 650 dalton to 4000 dalton and a viscosity of from 80 cP to 4000 cP, which process minimizes or avoids high temperature and viscosity problems associated with such a process. The process of the invention comprises the step of polymerization of THF and a high concentration of at least one alkylene oxide in the presence of an acid catalyst, at least one compound containing reactive hydrogen atoms and specific diluent or solvent. Following the polymerization step, copolyether glycols having a high molar incorporation of alkylene oxide of at least 50 mol %, a mean molecular weight of from 650 dalton to 4000 dalton and a viscosity of from 80 cP to 4000 cP are recovered. In this process, a very high percentage, such as for example, from about 95 to about 100 wt %, of the alkylene oxide in the feedstock to the polymerization step is consumed in the reaction. In an embodiment of the present invention, unreacted THF, unreacted alkylene oxide, dimer of the alkylene oxide, and any lower boiling components present are removed, and the copolyether glycol fraction is, for example, distilled to remove at least a portion of the OCE. The OCE portion removed may then be recycled to the polymerization step, where it can be incorporated into the copolyether glycol product.

The term "polymerization", as used herein, unless otherwise indicated, includes the term "copolymerization" within its meaning.

The term "PTMEG", as used herein, unless otherwise indicated, means poly(tetramethylene ether glycol). PTMEG is also known as polyoxybutylene glycol.

The term "copolyether glycol", as used herein in the singular, unless otherwise indicated, means copolymers of tetrahydrofuran and at least one alkylene oxide, which are also known as polyoxybutylene polyoxyalkylene glycols. An example of a copolyether glycol is a copolymer of tetrahydrofuran and ethylene oxide. This copolyether glycol is also known as poly(tetramethylene-co-ethyleneether) glycol.

The term "linear short chain copolyether glycol", as used herein in the singular, unless otherwise indicated, means copolyether glycols having a molecular weight of from 130 to 400 dalton. An example of a linear short chain copolyether glycol is HOCH₂CH₂OCH₂CH₂CH₂CH₂OH.

The term "THF", as used herein, unless otherwise indicated, means tetrahydrofuran and includes within its meaning alkyl substituted tetrahydrofuran capable of copolymerizing with THF, for example 2-methyltetrahydrofuran, 3-methyltetrahydrofuran, and 3-ethyltetrahydrofuran.

The term "alkylene oxide", as used herein, unless otherwise indicated, means a compound containing two, three or four carbon atoms in its alkylene oxide ring. The alkylene oxide can be unsubstituted or substituted with, for example, linear or branched alkyl of 1 to 6 carbon atoms, or aryl which is unsubstituted or substituted by alkyl and/or alkoxy of 1 or 2 carbon atoms, or halogen atoms such as chlorine or fluorine. Examples of such compounds include ethylene oxide ("EO"); 1,2-propylene oxide; 1,3-propylene oxide; 1,2-butylene oxide; 1,3-butylene oxide; 2,3-butylene oxide; styrene oxide; 2,2-bis-chloromethyl-1,3-propylene oxide; epichlorohydrin; perfluoroalkyl oxiranes, for example (1H,1H-perfluoropentyl) oxirane; and combinations thereof.

The term "oligomeric cyclic ether" (OCE), as used herein in the singular, unless otherwise indicated, means one or more of the series of cyclic compounds comprised of constituent ether fragments derived from at least one alkylene oxide and/or THF and arranged in a random fashion within the cyclic compound. Although used herein as a singular term, OCE refers to the distribution of cyclic ethers formed during polymerization of the THF and at least one alkylene oxide and thus refers to a series of individual compounds. As used herein, the term OCE excludes the dimer of the alkylene oxide co-monomer used in the polymerization, even though such a dimer is an example of cyclic ether. For example, in the case where the alkylene oxide is ethylene oxide, the dimer of the alkylene oxide is 1,4-dioxane. By excluding the dimer of the alkylene oxide from the term OCE, this definition of OCE may differ from that of OCE disclosed in the prior art.

In the case of copolymerization of, for example, ethylene oxide and THF, OCE comprises the series of cyclic oligomeric ethers comprised of ring-opened ethylene oxide and ring-opened THF repeat units, as represented by the formula [(CH₂CH₂O)ₓ(CH₂CH₂CH₂CH₂O)_{y}]ₙ. Examples of such OCE components are shown in Table A below. Two isomers were observed for molecular weight 232. Other higher molecular weight OCE components not listed in the Table are likely formed as well.

**Table A. Individual OCE's Identified in EO/THF Polymerization**

| Value for x | Value for y | Molecular weight |
|---|---|---|
| 1 | 2 | 188 |
| 1 | 3 | 260 |
| 1 | 4 | 332 |
| 1 | 5 | 404 |
| 2 | 2 | 232 |
| 2 | 3 | 304 |
| 2 | 4 | 376 |
| 3 | 1 | 204 |
| 3 | 2 | 276 |
| 3 | 3 | 348 |
| 4 | 2 | 320 |
| 4 | 3 | 392 |

One embodiment of the present invention is a continuous process for the copolymerization of feedstock comprising THF and a high concentration of alkylene oxide which minimizes or avoids high temperature and viscosity problems associated with such a process. Another embodiment of the present invention is a continuous process for the copolymerization of feedstock comprising THF and a high concentration of ethylene oxide which minimizes or avoids high temperature and viscosity problems associated with such a process. Herein also it is described a copolyether glycol product having a high molar incorporation, i.e. at least 50 mol %, of alkylene oxide.

The THF used as a reactant in the process of the invention can be any of those commercially available. Typically, the THF has a water content of less than about 0.03% by weight and a peroxide content of less than about 0.005% by weight. If the THF contains unsaturated compounds, their concentration should be such that they do not have a detrimental effect on the polymerization process of the present invention or the polymerization product thereof. For example, for some applications it is preferred that the copolyether glycol product of the present invention having a high molar concentration of alkylene oxide has low APHA color, such as, for example less than about 100 APHA units. Optionally, the THF can contain an oxidation inhibitor such as butylated hydroxytoluene (BHT) to prevent formation of undesirable byproducts and color. If desired, one or more alkyl substituted THF's capable of copolymerizing with THF can be used as a co-reactant, in an amount from about 0.1 to about 70% by weight of the THF. Examples of such alkyl substituted THF's include 2-methyltetrahydrofuran, 3-methyltetrahydrofuran, and 3-ethyltetrahydrofuran.

The alkylene oxide used as a reactant in the present process, as above indicated, may be a compound containing two, three or four carbon atoms in its alkylene oxide ring. It may be selected from, for example, the group consisting of ethylene oxide; 1,2-propylene oxide; 1,3-propylene oxide; 1,2-butylene oxide; 2,3-butylene oxide; 1,3-butylene oxide and combinations thereof. Preferably, the alkylene oxide has a water content of less than about 0.03% by weight, a total aldehyde content of less than about 0.01% by weight, and an acidity (as acetic acid) of less than about 0.002% by weight. The alkylene oxide should be low in color and non-volatile residue.

If, for example, the alkylene oxide reactant is EO, it can be any of those commercially available. Preferably, the EO has a water content of less than about 0.03% by weight, a total aldehyde content of less than about 0.01% by weight, and an acidity (as acetic acid) of less than about 0.002% by weight. The EO should be low in color and non-volatile residue.

Examples of compounds containing reactive hydrogen atoms which are suitable for use in the process of this invention include water, ethylene glycol, 1,4-butanediol, PTMEG having a molecular weight of from about 162 to 400 dalton, copolyether glycols having a molecular weight of from about 134 to 400 dalton, and combinations thereof. An example of a suitable copolyether glycol for use as a compound containing reactive hydrogen atoms is poly(tetramethylene-co-ethyleneether) glycol having a molecular weight of from about 134 to 400 dalton. These compounds could also be used in combination to regulate the molecular weight of the final product.

The acid catalyst useful in the present invention includes broadly any strong acid and super acid catalyst capable of ring-opening polymerization of cyclic ethers as generally known in the art. The catalyst may be homogeneous or heterogeneous. Heterogeneous catalysts may be used in extrudate form or in suspension. The use of a heterogeneous catalyst may facilitate separation of product from the catalyst, especially when the catalyst is used in extrudate form.

Suitable homogeneous acid catalysts for use herein include, by way of example but not by limitation, heteropolyacids as disclosed, for example, in U.S. Pat. No. 4,658,065.

Suitable heterogeneous acid catalysts for use herein include, by way of example but not by limitation, zeolites optionally activated by acid treatment, sulfate-doped zirconium dioxide, supported catalysts comprising at least one catalytically active oxygen-containing molybdenum and/or tungsten compound or a mixture of such compounds applied to an oxidic support, polymeric catalysts which contain sulfonic acid groups (optionally with or without carboxylic acid groups), and combinations thereof.

Natural or synthetic zeolites, a class of aluminum hydrosilicates (also known as crystalline aluminosilicates), having an open structure of three-dimensional networks with defined pores and channels in the crystal, may be used as heterogeneous acid catalysts in the process of the present invention. Suitable zeolites for use herein have a SiO₂:Al₂O₃ molar ratio ranging from about 4:1 to about 100:1, for example from about 6:1 to about 90:1, or from about 10:1 to about 80:1. The particle size of the zeolite may be less than about 0.5 micron, for example less than about 0.1 micron, or less than about 0.05 micron. The zeolites are used in the hydrogen (acid) form and may optionally be activated by acid treatment. The acidified zeolites for use herein are exemplified by faujasite (described in EP-A 492807), zeolite Y, zeolite Beta (described in U.S. Pat. No. 3,308,069), ZSM-5 (described in U.S. Pat. No. 3,702,886), MCM-22 (described in U.S. Pat. No. 4,954,325), MCM-36 (described in U.S. Pat. No. 5,250,277), MCM-49 (described in U.S. Pat. No. 5,236,575), MCM-56 (described in U.S. Pat. No. 5,362,697), PSH-3 (described in U.S. Pat. No. 4,439,409), SSZ-25 (described in U.S. Pat. No. 4,826,667) and the like.

The preparation of sulfate-doped zirconium dioxide is disclosed, for example, in U.S. Pat. No. 5,149,862.

Also useful as heterogeneous catalysts are those comprising at least one catalytically active oxygen-containing molybdenum and/or tungsten compound or a mixture of such compounds applied to an oxidic support as disclosed, for example, in U.S. Pat. No. 6,197,979. Examples of suitable oxidic supports include zirconium dioxide, titanium dioxide, hafnium oxide, yttrium oxide, iron (III) oxide, aluminum oxide, tin (IV) oxide, silicon dioxide, zinc oxide or mixture of these oxides. The supported catalysts may be, for example, additionally doped with sulfate or phosphate groups, as disclosed in German patent application DE-A 44 33606, pretreated with a reducing agent as described in DE 196 41481, or calcined and further comprising a promoter comprising at least one element or compound of an element of groups 2, 3 (including the lanthanides), 5, 6, 7, 8, and 14 of the periodic table of the elements, as disclosed in DE 196 49803.

The preferred above mentioned heterogeneous catalysts, for example, natural or synthetic zeolites, oxidic-supported active oxygen-containing molybdenum and/or tungsten, and zirconium dioxide, are spherical in shape, so that they are more attrition resistant and suitable for use in a continuously stirred tank reactor (CSTR).

Among the suitable polymeric catalysts which contain sulfonic acid groups, optionally with or without carboxylic acid groups, are those whose polymer chains are copolymers of tetrafluoroethylene or chlorotrifluoroethylene and a perfluoroalkyl vinyl ether containing sulfonic acid group precursors (again with or without carboxylic acid groups) as disclosed in U.S. Pat. Nos. 4,163,115 and 5,118,869 and as supplied commercially by E. I. du Pont de Nemours and Company under the tradename Nafion®. Such polymeric catalysts are also referred to as polymers comprising alpha-fluorosulfonic acids. An example of this type of catalyst for use herein is a perfluorosulfonic acid resin, i.e. it comprises a perfluorocarbon backbone and the side chain is represented by the formula -O-CF₂CF(CF₃)-O-CF₂CF₂SO₃H. Polymers of this type are disclosed in U.S. Pat. No. 3,282,875 and can be made by copolymerization of tetrafluoroethylene (TFE) and the perfluorinated vinyl ether CF₂=CF-O-CF₂CF(CF₃)-O-CF₂CF₂SO₂F, perfluoro (3,6-dioxa-4-methyl-7-octenesulfonyl fluoride) (PDMOF), followed by conversion to sulfonate groups by hydrolysis of the sulfonyl fluoride groups and ion exchanged as necessary to convert them to the desired acidic form. See also U.S. Pat. No. 4,139,567 for a description of perfluorosulfonic acid resin catalyst useful herein.

The polymeric heterogeneous catalysts which can be employed according to the present invention can be used in the form of powders or as shaped bodies, for example in the form of beads, cylindrical extrudates, spheres, rings, spirals, or granules. The perfluorosulfonic acid resin type of polymeric heterogeneous catalyst can be pretreated (hydrotreated) by placing it along with deionized water at a weight ratio of resin/water of from about 1/4 to about 1/10 into a clean stainless steel autoclave, heating to a temperature of, for example, from about 170°C to about 210°C under agitation, and holding at that temperature for up to about 12 hours, for example from about 1 hour to about 8 hours.

The polymerization step a) or a') of the present invention must be carried out with a suitable diluent or solvent. Such diluent or solvent in the polymerization step includes, for example, inert diluents or solvents, such as one or more aliphatic, cycloaliphatic, or aromatic hydrocarbons. It is also possible to use the dimer(s) of the alkylene oxide(s) comonomers, for example 1,4-dioxane in the case of ethylene oxide, as a diluent or solvent, alone or in combination with another diluent or solvent, for example an aliphatic, cycloaliphatic, or aromatic hydrocarbon.

The polymerization step of the present invention is generally carried out at from 30°C to 80°C, such as from about 50°C to about 72°C, for example from about 50°C to about 65°C. Such a temperature range is suitable for OCE incorporation into the copolyether glycol product in the present diluent or solvent-assisted process. The pressure employed is generally from about 200 to about 800 mmHg, for example from about 300 to about 500 mmHg, depending on the diluent or solvent used.

To avoid the formation of peroxides, the polymerization step of the present process may be conducted under an inert gas atmosphere. Non-limiting examples of suitable inert gases for use herein include nitrogen, carbon dioxide, or the noble gases.

The polymerization step of the present invention can also be carried out in the presence of hydrogen at hydrogen pressure of from about 0.1 to about 10 bar.

The polymerization process step of the present invention is carried out continuously to maintain consistency in the products, with one or more other steps of the process being carried out continuously or batch wise, i.e. the feed can be prepared in a large batch and polymerized continuously until the batch is consumed. Similarly, the product could be stored and processed after the batch is completely processed In the polymerization reactor.

The polymerization reaction can be carried out in conventional reactors or reactor assemblies suitable for continuous processes in a suspension or fixed-bed mode, for example in loop reactors or stirred reactors in the case of a suspension process or in tube reactors or fixed-bed reactors in the case of a fixed-bed process. A continually stirred tank reactor (CSTR) is desirable due to the need for good mixing in the present process, especially when the products are produced in a single pass mode.

In such a continuous polymerization reactor apparatus, the catalyst can, if desired, be pretreated before or after it has been introduced into the reactor(s). Examples of catalyst pretreatments include drying by means of gases, for example air or nitrogen, which have been heated to 80-200 °C, or, in the case of supported catalysts comprising a catalytically active amount of at least one oxygen-containing molybdenum and/or tungsten compound, pretreatment with a reducing agent as is disclosed in DE 19641481. The catalyst can also be used without pretreatment.

In a fixed-bed process mode, the polymerization reactor apparatus can be operated in the upflow mode, that is, the reaction mixture is conveyed from the bottom upward, or in the downflow mode, that is, the reaction mixture is conveyed through the reactor from the top downward.

The polymerization reactor can be operated using a single pass without internal recirculation of product, such as in a CSTR. The polymerization reactor can also be operated in the circulation mode, i.e. the polymerization mixture leaving the reactor is circulated. In the circulation mode, the ratio of recycle to feed is less than 100:1, for example less than 50:1, or for example less than 40:1.

Feedstock can be introduced to the polymerization reactor using delivery systems common in current engineering practice either batchwise or continuously. A preferred method of feed delivery combines, for example EO and THF, as a liquid mixed feed to the reactor, for example a CSTR, in continuous fashion along with the other feed ingredients. The compound containing reactive hydrogen and any recycled OCE streams are metered independently or in ratio-fashion to the reactor. Part of or an entire THF-rich stream separated downstream of the polymerization reactor can be recycled and used in place of part of the neat THF feed. The range of alkylene oxide, e.g. EO, in the feed is from 10 to 90 wt %, for example from about 20 to about 50 wt %. The range of THF in the feed is from 10 to 90 wt %, for example from about 30 to about 70 wt %. The range of OCE in the feed is from 0 (prior to any recycle of OCE stream separated downstream) to about 20 wt %, for example from about 0 to about 15 wt %. The range of linear short chain copolyether glycols in the feed is from 0 (prior to any recycle of OCE stream separated downstream) to about 10 wt %, for example from 0 (prior to any recycle of OCE stream separated downstream) to about 5 wt %. The range of the compound containing reactive hydrogen may be from 0.1 to 5 wt % as water, for example from about 0.1 to about 2 wt %. The range of suitable diluent or solvent in the feed is from greater than 10 to 40 wt %, for example from 10 to about 30 wt %.

If the polymerization has been carried out in the suspension mode, the major part of the polymerization catalyst requires separation from the polymerization product mixture, i.e. retained in the polymerization reactor, in the work-up of the output from the polymerization step, for example by filtration, decantation or centrifugation. In other words, the resulting polymerization product mixture may be passed directly to the step of separation of THF and alkylene oxide dimer from the polymerization product mixture, or optionally it may be treated first to remove any catalyst fines or downstream products of the catalyst before being passed to the separation step.

The molar incorporation of alkylene oxide, e.g. ethylene oxide, in the copolyether glycol product from the polymerization reaction step of this invention is at least 50 mol %, for example from 50 to about 85 mol %. The concentration of the copolyether glycol in the polymerization reaction step product stream is less than about 75 wt %, for example from about 40 to less than about 75 wt %, e.g. from about 50 to about 70 wt %.

In the embodiment of the present process involving a step of separating a majority of the THF and alkylene oxide dimer, and alkylene oxide, from the polymerization product mixture, e.g. step b') above, it can be carried out either batchwise or continuously. By majority of THF and dimer in this step we mean from at least about 95 wt % to about 100 wt %, for example at least about 98 wt %. The separation is performed by distillation which separates the majority of the THF, the alkylene oxide, the alkylene oxide dimer, and any low boilers such as acetaldehyde or 2-methyl-1,3-dioxolane from the polymerization product mixture. The separation of the THF in this step can in principle be carried out in one distillation step, or it can be carried out in a plurality of distillation steps, for example two or three distillation steps followed by a stripping step. It is advantageous to carry out the distillation steps under different pressures.

The configuration of the separation operation is dependent on the alkylene oxide, the compound(s) containing reactive hydrogen atoms used in the polymerization step, and the diluent used. Depending on the separation task, possible distillation apparatuses are appropriate columns or evaporators such as falling film evaporators or thin film evaporators. It may also be advantageous to use tray or packed columns.

Following are disclosed in more detail various non-limiting embodiments for the separation of THF and alkylene oxide dimer from the polymerization product mixture when using THF, ethylene oxide (EO), and water in the polymerization step.

The removal of the major part of the unreacted THF at nearly atmospheric pressure (for example, at 450-900 mm Hg) may be carried out in a continuously operated circulating flash evaporator. The polymerization product mixture, optionally having been filtered to remove any catalyst fines or downstream products of the catalyst, is fed into a flash evaporator via a heated circulation stream into the side near the top of the evaporator where it flashes. The polymerization product mixture from this embodiment, e.g. step a') above, usually has a THF content of from about 5 wt % to about 40 wt %, depending upon the operating temperature and pressure selected. The 1,4-dioxane is generally present from about 0.1 wt % to about 5 wt %. The water content is generally not more than about 2500 ppm, the alkylene oxide, e.g. EO, content is from about 200 ppm to about 5000 ppm, and the 2-methyl-1,3-dioxolane concentration is from about 200 ppm to about 2000 ppm. Other compounds such as ethylene glycol (typically from about 100 ppm to about 1000 ppm) and 1,4-butanediol (typically from about 30 ppm to about 300 ppm) are also present. At a circulating temperature at the top of from about 100°C to about 160°C and a temperature at the bottom of from about 100°C to about 200°C, for example from about 100°C to about 120°C, the major part of the water, unreacted alkylene oxide, e.g. EO, and acetaldehyde in admixture with THF and 1,4-dioxane are distilled off via the top. The tetrahydrofuran fraction obtained as distillate is condensed and all or some of it, such as for example at least about 99 %, can be subsequently returned to the polymerization step after purification, for example by distillation. The crude product mixture obtained as distillation residue at the bottom of the evaporator comprises copolyether glycol having a high molar incorporation of alkylene oxide and a mean molecular weight of from 650 dalton to 4000 dalton, OCE, and a very small amount of THF, dimer of the alkylene oxide, e.g. 1,4-dioxane, the diluent and other low boilers.

As an alternative, the removal of the major part of the unreacted THF at atmospheric pressure can be carried out in a thin film evaporator or distillation column, for example a falling film evaporator with circulation, which is operated at from about 100°C to about 200°C, for example from about 120°C to about 180°C. The composition of the THF fraction obtained as distillate and that of the crude product mixture obtained as distillation residue correspond to those described above.

The distillation residue obtained from the first distillation step is subsequently freed of most of the residual THF under reduced pressure, for example in a second circulating flash evaporator operating at about 100°C to about 150°C (for example at about 120°C) and from about 80 mm Hg to about 160 mm Hg (for example at about 130 mm Hg) with the circulation temperature from about 2°C to about 5°C higher than the evaporator temperature. Crude product leaving from the second recovery step generally contains less than about 10 ppm EO, less than about 50 ppm water, less than about 200 ppm of 2-methyl-1,3-dioxolane, less than about 3000 ppm 1,4-dioxane, and less than about 1.5 wt % THF. All or some of the THF fraction obtained as distillate, which comprises predominantly THF, such as for example at least about 99 %, can be returned to the polymerization step after purification in the distillation column. The purified diluent can also be returned back to the polymerization step in a similar manner as that of THF.

To reduce the remaining THF and dimer, e.g.1,4-dioxane, a third step using ultra low vacuum, for example less than 3 torr, or inert gas stripping, for example with nitrogen, can be employed. The third step could use thin film evaporators, wiped film evaporators, disc and donut contactors, or packed columns. For example, when using nitrogen stripping in a packed column with nitrogen at about 170°C feed at the bottom and crude product at about 120°C feed at the top, the crude product leaving the bottom of the column might have only dropped by about 1 to 2°C, for example to about 118°C to 119°C. The EO and water content would generally be less than about 1 ppm, the 2-methyl-1,3-dioxolane concentration less than about 3 ppm, the THF concentration less than about 40 ppm, and the 1,4-dioxane concentration less than about 250 ppm. The left over diluent will depend on the boiling point of the compound, for example when 1,4-dioxane is used as the diluent, it would be less than 250 ppm. Other high boiling compounds like ethylene glycol and 1,4-butanediol would be slightly reduced but would mainly remain in the crude product.

After a majority of the THF and the alkylene oxide dimer have been separated from the polymerization product mixture to produce a crude product mixture comprising OCE, copolyether glycol having a high molar incorporation of alkylene oxide, a mean molecular weight of from 650 dalton to 4000 dalton and a viscosity of from 80 cP to 4000 cP, and linear short chain copolyether glycol, the crude product mixture may be treated to remove any catalyst fines or downstream products of the catalyst before being passed to the step of separation of at least a portion of the OCE from the crude product mixture.

Either or both of the polymerization product mixture and the crude product mixture may be treated to remove any catalyst fines or downstream products of the catalyst which may result, for example, from attrition of or leaching of the catalyst during pretreatment or during polymerization. Examples of these include finely divided, suspended or emulsified abraded catalyst comprising unchanged catalyst, the catalyst support and/or the active catalyst component. In the case of supported catalysts comprising an oxidic support material to which oxygen-containing molybdenum or tungsten compounds or mixtures of such compounds have been applied as catalytically active compounds, the abraded material is accordingly unchanged catalyst, support material and/or active oxygen-containing molybdenum or tungsten components. Downstream products of the catalyst are, for example, dissolved cations or anions of the active components, for example tungsten or molybdenum cations or molybdate or tungstate anions. In the case of ion exchangers containing sulfonic acid groups, for example Nafion®, the downstream product can include fluoride ions and/or sulfonic acids; in the case of the sulfate-doped metal oxides, the downstream product can include sulfuric acid and/or metal cations or anions.

Although the amount of such catalyst and/or downstream products of the catalyst is small and generally does not exceed 0.1 % by weight, for example 0.01% by weight, based on the output from the polymerization step, this material should be removed or it would otherwise remain in the copolyether glycol and change the specification data and thereby the properties of the copolyether glycol product.

The catalyst and/or downstream products of the catalyst can be separated from the polymerization product mixture and/or the crude product mixture by filtration, for example ultrafiltration, adsorption on solid adsorbents, for example activated carbon, and/or by means of ion exchangers, for example molecular sieves having pore sizes of from 3 to 10 angstroms. Adsorption on solid adsorbents can also be combined with neutralization using acids or bases. Filtration also removes other insoluble impurities in the product from the feed, i.e. high molecular weight polyethylene glycol (PEG) in EO, or from the process or equipment, i.e, rust and other foreign materials.

Separating at least a portion, such as from about 4 to about 30 wt %, for example from about 4 to about 20 wt %, of the OCE from the crude product mixture, and from about 1 to about 10 wt %, for example from about 1 to about 8 wt %, of the linear short chain copolyether glycol from the crude product mixture, e.g. of step b'), to produce an OCE stream comprising OCE and linear short chain copolyether glycol, and a product stream comprising from about 95.0 to about 99.9 wt %, for example from about 98.0 to about 99.8 wt %, copolyether glycol, e.g. in step c'), can be carried out in practice by distillation using a conventional reduced pressure distillation apparatus. For example, distillation can be carried out batchwise from a batch distillation apparatus, without rectification. Short-path distillation apparatuses, for example conventional film evaporators with mechanical surface distribution or automatic distribution, are advantageous. In the case of the film evaporators, the continuous procedure is generally preferred, whereas distillation from a batch distillation apparatus is carried out batchwise in most cases. Flash evaporators are also suitable for separating off the OCE. In these apparatuses, the required evaporation energy is introduced into the product in the form of sensible heat, after which the product is let down into a suitable vessel under reduced pressure. During this procedure, the OCE present therein is vaporized. The distillation can be reinforced by additional stripping with an inert gas, such as nitrogen or superheated steam. For this purpose, available thin film evaporators, falling film evaporators and/or short path distillation units are useful.

In this separation, e.g. step c'), OCE and low molecular weight copolyether glycols having a mean molecular weight of from about 200 to about 500 dalton are separated in at least one distillation step at a pressure of from about 0.1 to about 130 µbar, for example from about 1 to about 90 µbar, or for example from about 10 to about 70 µbar, and at a temperature of from about 180°C to about 250°C, for example from about 190°C to about 230°C, and copolyether glycol having a high molar incorporation of alkylene oxide, a mean molecular weight of from 650 dalton to 4000 dalton and a viscosity of from 80 cP to 4000 cP is isolated.

In step d') a majority, such as greater than about 50 wt %, for example from greater than about 50 wt % to about 99 wt %, of the OCE stream of step c') is recovered and, if desired, recycled to polymerization step a').

### Diluent or solvent

We have discovered that using a proper diluent or solvent in the polymerization reaction mixture for the present process overcomes the deficiencies of the prior art for the copolymerization of feedstock comprising THF and high concentrations of alkylene oxide in the presence of a compound containing active hydrogen in a continuous polymerization process, such as in a CSTR, and especially when a heterogeneous catalyst is employed. The dilution of the polymerization reactor content with the specific diluent or solvent reduces the viscosity of the system and facilitates retention of the catalyst in the reactor. The diluent or solvent for use herein must have a proper boiling point so that reaction heat can be efficiently carried out by way of evaporative cooling by using the unreacted reagents and the inert diluent or solvent through an external condenser.

The diluent or solvent does not participate in the copolymerization reaction mechanism, and may be said to be inert in relation thereto. It can be, for example, one or a combination of linear or branched short chain hydrocarbons of from 5 to 8 carbon atoms, cyclic hydrocarbons of from 5 to 8 carbon atoms, stable oxygenates such as 1,4-dioxane and substituted or unsubstituted aromatic hydrocarbons. Non-limiting examples of such suitable diluents or solvents include, for example, hexane, heptane, cyclohexane, 1,4-dioxane, toluene and xylene. One important criteria is that the diluent or solvent has a boiling point of from 40°C to 150°C, for example from about 50°C to about 120°C. This allows use of cooling water to cool the polymerization reactor, a great advantage, e.g. lower cost and process simplicity, compared to use of refrigeration systems. Evaporative cooling of the polymerization reactor is highly preferred for a commercial process of this nature. This invention facilitates evaporative cooling of the reactor content, e.g. boiling under reaction conditions, which are the combination of the temperature and the pressure.

The following Examples demonstrate the present invention and its capability for use. The invention is capable of other and different embodiments, and its several details are capable of modifications in various apparent respects, without departing from the scope and spirit of the present invention. Accordingly, the Examples are to be regarded as illustrative in nature and non-limiting.

### Materials

THF was obtained from Chemcentral Corporation. EO was purchased from ARC Specialty Products and was used without further purification. The NR50 Nafion® perfluorinated sulfonic acid resin catalyst was obtained from E. I. du Pont de Nemours, Wilmington, Delaware, USA, and hydrotreated as above indicated. The filter aid was purchased from Aldrich Chemical, and deionized water was used.

### Analytical Methods

The conversion to copolymers is defined by the weight percent of non-volatiles in the crude product mixture collected from the reactor exit, which was measured by a vacuum oven (130°C and about 200 mmHg) removal of the volatiles in the crude product mixture.

The overall conversion was also determined by distillation of the unreacted THF, alkylene oxide and relatively volatile by-product, e.g. 1,4-dioxane, under reduced pressure and 100°C, the percent of the residue left in the roto-vap flask compared with the starting reaction mixture is the overall percent conversion. The crude product mixture was further distilled at around 200°C under <0.3 mmHg with a short path distillation unit to remove the low molecular weight oligomers which comprised a combination of linear and cyclic molecules. The final product was characterized with NMR for molecular weight as well as the incorporation of the alkylene oxide.

Both molecular weight and percent incorporation of alkylene oxide were measured by ¹H NMR per ASTM method D 4875.

The short chain glycol and OCE contents were determined by gas chromatography using a DB1701 column of 5 meter length with an FID detector. Temperature programming was commenced at 50°C, held for 2 minutes at 50°C, then ramped at 20°C/minute to 250°C, held at 250°C for 22.5 minutes, then reduced to 50°C. Sample dilution was 1:4 by weight with toluene; and sample injection size was 1 microliter.

Hydroxyl number was determined by titration of hydroxyl end groups per ASTM method E 222.

The APHA color of the products was determined per ASTM method D 4890.

The polydispersity was determined by GPC, which was performed with an HP 1090 series II liquid chromatography with a Waters Ultrastyragel 500 A column. THF was used as eluant. Polystyrene and PTMEG standards were used for calibration. The polydispersity was calculated as the ratio between the Mw/Mn.

The viscosity of the final product was determined using ASTM method D4878 at 40°C and expressed in centipoise (cP).

### EXAMPLES

All parts and percentages are by weight unless otherwise indicated.

### Catalyst Preconditioning

Before use in the polymerization experiments described below, 90 grams (dry basis) of perfluorosulfonic acid resin catalyst and 14 grams of water were loaded into a jacketed one liter stainless steel CSTR reactor system. The catalyst was conditioned by feeding 4.8 wt % EO and 0.24 wt % water in THF for 24 hours at 58°C with a 1.5 hour hold time. The catalyst was then treated with the same feed for 18 hours at 60°C with a 1.2 hour hold time. The feed was then discontinued and the reactor system was allowed to cool to about 30°C. The catalyst was unloaded, filtered, rinsed with THF and then dried on a Buckner funnel at ambient conditions under the pull of house vacuum. After drying, the catalyst contained 13.5 wt % volatiles as determined by oven drying the catalyst at 130°C.

### Example 1

A liquid mixture of 1830 grams of 1,4-dioxane and 35.4 grams of deionized water was charged to 2100 grams of THF in an air free 5 gallon vessel equipped with an agitator and a three baffle set to make a THF solution. The agitator was energized and 2135 grams of EO were added to the THF solution with cooling water supplied to the vessel. After 30 minutes of mixing, the mixture was transferred to a 4 gallon mixture transfer tank. The feed mixture was fed to a supply tank, made inert with nitrogen in the free space, and fed to a jacketed 0.5 liter stainless steel CSTR reactor system using a metering pump. The agitator in the reactor was equipped with a single set of impellors pitched 45 degrees to provide downward pumping of the reactor contents. The liquid feed entered at the same height as the bottom impellor.

The jacketed 0.5 liter reactor system was loaded with 45 grams of the pretreated perfluorosulfonic acid resin catalyst. The reactor was first filled with a solution of 2 wt % 1,4-butanediol and 98 wt % THF. The reactor mixture was heated to 62°C at 500 rpm agitation and 40 psig nitrogen pressure while feed solution was added at 125 ml/hour to give a 4 hour hold-up time. The feed solution comprised 35.0 wt % ethylene oxide, 30.0 wt % 1,4-dioxane diluent or solvent, 0.58 wt % distilled water, and the balance THF. Steady-state conditions were reached after about 8 turnovers in the reactor, operated at a hold-up time of 4 hours/turnover, as evidenced by constant percent conversion based on sample weight after roto-evaporation and by constant molecular weight of the copolyether glycol product.

The wt % EO and dioxane in the crude product was determined by GC on a sample collected after the reactor exit.

Product from the experiment (both steady state and non-steady state material) was kept as an individual sample and was roto-evaporated to remove the volatiles. The roto-evaporated sample was then characterized to determine % conversion level, OCE content and the APHA color.

After roto-evaporation, the sample was filtered. Filter aid (Celpure® 300) was added to the filter paper and to the sample. Then the sample was fed to the short path distillation unit (2 or 4 inch unit from Pope Scientific). Conditions were 190°C wall temperature, 0.1 torr vacuum and with feed rate about 300 to 500 grams/hour. After short path distillation, the residue, the copolyether glycol, was characterized for OCE content, MW, and mol % EO incorporated. The distillate, the OCE, was analyzed for short chain glycol content.

Analysis of the polymerization reactor exit mixture showed that the overall conversion was 56.4 wt % (the conversion without the 1,4-dioxane diluent would be about 80.1 wt %), the amount of low molecular weight oligomers removed by the short path distillation step was 5.0 wt %, the molecular weight of the final copolyether glycol product was 1968 g/mole (1968 dalton), and the EO incorporation was 67.8 mol %. Polydispersity of the copolyether glycol was 1.94 and color was 14 APHA units. The viscosity of the final copolyether glycol product was 517 cP.

### Example 2

An experiment similar to Example 1 was carried out in a jacketed one liter stainless steel CSTR reactor system with 90 grams of the pretreated perfluorosulfonic acid resin catalyst. A 6 hours hold-up time and temperature of 56°C was used. The feed contained 36.0 wt % EO, 30.0 wt % 1,4-dioxane diluent or solvent, 1.0 wt % distilled water and the balance THF. Under a new steady-state condition, the overall conversion was 54.8 wt %, the low molecular weight oligomers that were removed by the short-path-distillation unit was 6.6 wt %, the molecular weight of the final product was 1209 g/mol (1209 dalton), and the EO incorporation in the product had reached 71.3 mol %. Polydispersity of the copolyether glycol was 1.66 and color was 22 APHA units. The viscosity of the final copolyether glycol product was 224 cP.

### Example 3

Example 2 was repeated except that a new feed was fed to the reactor which contained 36.0 wt % EO, 30.0 wt % 1,4-dioxane diluent or solvent, 0.7 wt % distilled water and the balance THF. Under a new steady-state condition, the overall conversion was 57.8 wt %, the low molecular weight oligomers that were removed by the short-path-distillation unit was 4.9 wt %, the molecular weight of the final product was 1674 g/mol (1674 dalton), and the EO incorporation in the product had reached 69.9 mol %. Polydispersity of the copolyether glycol was 1.91 and color was 52 APHA units. The viscosity of the final copolyether glycol product was 377 cP.

### Comparative Example 1

Example 2 was again repeated except that the reaction was run at 58°C and 1.2 hours hold-up time with a new feed which contained 3.9 wt % EO, 0.51 wt % deionized water and the balance THF. Under a new steady-state condition, the overall conversion was 17.6 wt %, the low molecular weight oligomers that were removed by the short-path-distillation unit was 16.7 wt %, the molecular weight of the final product was 1009 g/mol (1009 dalton), and the EO incorporation in the product was 31.9 mol %. Polydispersity of the copolyether glycol was 1.90 and color was 22 APHA units. The viscosity of the final copolyether glycol product was 204 cP.

### Comparative Example 2

Example 2 was again repeated except that the reaction was run at 56°C and 2.0 hours hold-up time with a new feed which contained 13.8 wt % EO, 0.31 wt % deionized water and the balance THF. Under a new steady-state condition, the overall conversion was 49.7 wt %, the low molecular weight oligomers that were removed by the short-path-distillation unit was 13.0 wt %, the molecular weight of the final product was 2970 g/mol (2970 dalton), and the EO incorporation in the product was 38.6 mol %. Polydispersity of the copolyether glycol was 2.60 and color was 12 APHA units. The viscosity of the final copolyether glycol product was 2891 cP.

It is observed from the results of the above comparative examples that the overall conversion increases rapidly with increasing content of the ethylene oxide in the feed under similar reaction conditions, e.g. with nearly 100% conversion of the ethylene oxide, when a diluent was not used. The data clearly show that increase of EO content in the polymerization reactor feed (for example greater than 27 wt %) or in the final product (for example greater than 50 mol %) leads to extremely high overall conversion. This will cause two practical problems in a commercial CSTR process without the suitable diluent or solvent, especially when a heterogeneous catalyst is used. First, the reaction mixture will be very viscose, and that makes it very difficult to retain the catalyst, e.g. a filtration problem. Second, the unreacted THF in the steady-state will not be sufficient to carry out the reaction heat via an evaporative cooling system which is not an issue under relatively lower overall conversions. Both problems are properly addressed by using a suitable inert diluent or solvent as in the present invention, e.g. diluting the reaction mixture to facilitate the filtration and provide more evaporative media for cooling the reactor under steady-state operation.

When numerical lower limits and numerical upper limits are listed herein, ranges from any lower limit to any upper limit are contemplated.

While the illustrative embodiments of the invention have been described with particularity, it will be understood that various other modifications will be apparent to and may be readily made by those skilled in the art.

## Claims

1. A continuous process for manufacturing copolyether glycol having a high molar incorporation of alkylene oxide of at least 50 mol %, a mean molecular weight of from 650 dalton to 4000 dalton and a viscosity of from 80 cP to 4000 cP comprising the steps of:
a) polymerizing from 15 to 90 parts feedstock comprising from 10 to 90 wt % tetrahydrofuran and from 10 to 90 wt % of at least one alkylene oxide, in the presence of from 0.1 to 5 wt % of at least one compound containing reactive hydrogen atoms, from 10 to 40 wt % of diluent or solvent having a boiling point of from 40°C to 150°C, and an acid catalyst, at a temperature of from 30 °C to 80 °C, to produce a polymerization product comprising copolyether glycol having a high molar incorporation of alkylene oxide of at least 50 mol %, a mean molecular weight of from 650 dalton to 4000 dalton and a viscosity of from 80 cP to 4000 cP; and
b) recovering the copolyether glycol from the polymerization product,
wherein mean molecular weight and molar incorporation of alkylene oxide are measured by ¹H NMR according to ASTM D 4875 and viscosity is determined using ASTM D 4878 at 40°C; and wherein said copolyether glycol is a copolymer of tetrahydrofuran and at least one alkylene oxide.

2. A continuous process according to claim 1 for manufacturing poly(tetramethylene-co-ethyleneether) glycol having a high molar concentration of ethylene oxide of at least 50 mol %, a mean molecular weight of from 650 dalton to 4000 dalton and a viscosity of from 80 cP to 4000 cP comprising the steps of:
a) polymerizing from 15 to 90 parts feedstock comprising from 30 to 70 wt % tetrahydrofuran and from 20 to 50 wt % of ethylene oxide; in the presence of from 0.1 to 5 wt % of at least one compound containing reactive hydrogen atoms selected from the group consisting of water, ethylene glycol, 1,4-butanediol, poly(tetramethylene ether) glycol having a molecular weight of from 130 dalton to 400 dalton, copolyether glycol having a molecular weight of from 130 dalton to 400 dalton and combinations thereof; from greater than 10 to 40 wt % of inert diluent or solvent selected from the group consisting of linear or branched short chain hydrocarbons of from 5 to 8 carbon atoms, cyclic hydrocarbons of from 5 to 8 carbon atoms, stable oxygenates, substituted or unsubstituted aromatic hydrocarbons, and combinations thereof, said diluent or solvent having a boiling point of from 40°C to 150°C; and an acid catalyst at a temperature of from 30°C to 80°C to produce a polymerization product comprising poly(tetramethylene-co-ethyleneether) glycol having a high molar incorporation of ethylene oxide of at least 50 mol %, a mean molecular weight of from 650 dalton to 4000 dalton and a viscosity of from 80 cP to 4000 cP; and
b) recovering the poly(tetramethylene-co-ethyleneether) glycol from the polymerization product.

3. A continuous process for manufacturing copolyether glycol having a high molar incorporation of alkylene oxide of at least 50 mol %, a mean molecular weight of from 650 dalton to 4000 dalton and a viscosity of from 80 cP to 4000 cP comprising the steps of:
a') polymerizing from 15 to 90 parts feedstock comprising from 10 to 90 wt % tetrahydrofuran and from 10 to 90 wt % of at least one alkylene oxide, in the presence of from 0.1 to 5 wt % of at least one compound containing reactive hydrogen atoms, from 10 to 40 wt % of inert diluent or solvent having a boiling point of from 40°C to 150°C, and an acid catalyst at a temperature of from 30 °C to 80 °C to produce a polymerization product mixture comprising oligomeric cyclic ethers (OCE) copolyether glycol having a high molar incorporation of alkylene oxide of at least 50 mol %, a mean molecular weight of from 650 dalton to 4000 dalton and a viscosity of from about 80 cP to 4000 cP, at least one dimer of the alkylene oxide, linear short chain copolyether glycol and tetrahydrofuran;
b') separating a majority of the tetrahydrofuran and the dimer of the alkylene oxide from the polymerization product mixture of step a') to produce a crude product mixture comprising oligomeric cyclic ethers (OCE), copolyether glycol having a high molar incorporation of alkylene oxide of at least 50 mol %, a mean molecular weight of from 650 dalton to 4000 dalton and a viscosity of from 80 cP to 4000 cP, and linear short chain copolyether glycol;
c') separating at least a portion of the oligomeric cyclic ethers (OCE) and linear short chain copolyether glycol from the crude product mixture of step b') to produce an oligomeric cyclic ethers (OCE) stream comprising oligomeric cyclic ethers (OCE) and linear short chain copolyether glycol, and a product stream comprising copolyether glycol having a high molar incorporation of alkylene oxide of at least 50 mol %, a mean molecular weight of from 650 dalton to 4000 dalton and a viscosity of from 80 cP to 4000 cP; and
d') optionally recycling at least a portion of the oligomeric cyclic ethers (OCE) stream of step c') to the polymerization step a');
wherein mean molecular weight and molar incorporation of alkylene oxide are measured by ¹H NMR according to ASTM D 4875 and viscosity is determined using ASTM D 4878 at 40°C; and wherein said copolyether glycol is a copolymer of tetrahydrofuran and at least one alkylene oxide, and wherein the term oligomeric cyclic ethers (OCE) excludes the dimer of the alkylene oxide co-monomer used in the polymerization.

4. The process of claim 1 or claim 3 wherein the alkylene oxide is selected from the group consisting of ethylene oxide; 1,2-propylene oxide; 1,3-propylene oxide; 1,2-butylene oxide; 2,3-butylene oxide; 1,3-butylene oxide; and combinations thereof.

5. The process of claim 1 or claim 3 wherein the compound containing reactive hydrogen atoms is selected from the group consisting of water, ethylene glycol, 1,4-butanediol, poly(tetramethylene ether) glycol having a molecular weight of from 130 dalton to 400 dalton, copolyether glycol having a molecular weight of from 130 dalton to 400 dalton, and combinations thereof.

6. The process of claim 1 wherein the acid catalyst is selected from the group consisting of zeolites optionally activated by acid treatment, sulfate-doped zirconium dioxide, supported catalysts comprising at least one catalytically active oxygen-containing molybdenum or tungsten compound or a mixture of such compounds applied to an oxidic support, polymeric catalysts which contain sulfonic acid groups, and combinations thereof.

7. The process of claim 6 wherein the polymeric catalyst comprises a perfluorosulfonic acid resin.

8. The process of claim 1 or claim 3 wherein the tetrahydrofuran further comprises at least one alkyltetrahydrofuran selected from the group consisting of 2-methyltetrahydrofuran, 3-methyltetrahydrofuran, 3-ethyltetrahydrofuran and combinations thereof.

9. The process of claim 1 or claim 3 wherein the diluent or solvent is selected from the group consisting of one or a combination of linear or branched short chain hydrocarbons of from 5 to 8 carbon atoms, cyclic hydrocarbons of from 5 to 8 carbon atoms, stable oxygenates and substituted or unsubstituted aromatic hydrocarbons, said diluent or solvent having a boiling point of from 40°C to 150°C.

10. The process of claim 9 wherein the diluent or solvent comprises hexane, heptane, cyclohexane, 1,4-dioxane, toluene, xylene or combinations thereof.

11. The process of claim 1 wherein the polymerization step a) is conducted in a continuously stirred tank reactor.

12. The process of claim 11 wherein the acid catalyst comprises a polymeric catalyst which contains sulfonic acid groups.

13. The process of claim 2 wherein the polymerization step a) is conducted in a continually stirred tank reactor.

14. The process of claim 3 wherein the polymerization step a') is conducted in a continually stirred tank reactor.

15. The process of claim 2 or claim 14 wherein the acid catalyst is a polymeric catalyst which contains sulfonic acid groups.

16. The process of claim 15 wherein the polymeric catalyst comprises a perfluorosulfonic acid resin.

17. The process of claim 3 wherein the acid catalyst is selected from the group consisting of zeolites optionally activated by acid treatment, sulfate-doped zirconium dioxide, supported catalysts comprising at least one catalytically active oxygen-containing molybdenum or tungsten compound or a mixture of such compounds applied to an oxidic support, polymeric catalysts which contain sulfonic acid groups, and combinations thereof.

18. The process of claim 3 further comprising filtering the polymerization product mixture of step a') prior to step b'), and filtering the crude product mixture of step b') prior to step c').

19. The process of claim 3 wherein the alkylene oxide comprises ethylene oxide and the dimer of the alkylene oxide comprises 1,4-dioxane.

20. The process of claim 3 further comprising separating at least a portion of the dimer of the alkylene oxide obtained in step b') from the tetrahydrofuran obtained in step b'), and optionally recycling to polymerization step a') at least a portion of the tetrahydrofuran so obtained.

## Patentansprüche

1. Kontinuierliches Verfahren zur Herstellung von Copolyetherglycol mit einem hohen molaren Einbau von Alkylenoxid von mindestens 50 Mol-%, einem mittleren Molekulargewicht von 650 Dalton bis 4.000 Dalton und einer Viskosität von 80 cP bis 4000 cP, umfassend die Schritte:
a) Polymerisieren von 15 bis 90 Teilen Einsatzmaterial, das von 10 bis 90 Gew.-% Tetrahydrofuran und 10 bis 90 Gew.-% mindestens eines Alkylenoxids umfasst, in Gegenwart von 0,1 bis 5 Gew.-% mindestens einer Verbindung, die reaktive Wasserstoffatome enthält, von 10 bis 40 Gew.-% Verdünnungsmittel oder Lösungsmittel mit einem Siedepunkt von 40 °C bis 150 °C und eines sauren Katalysators bei einer Temperatur von 30 °C bis 80 °C, um ein Polymerisationsprodukt herzustellen, das Copolyetherglycol mit einem hohen molaren Einbau von Alkylenoxid von mindestens 50 Mol-%, einem mittleren Molekulargewicht von 650 Dalton bis 4.000 Dalton und einer Viskosität von 80 cP bis 4000 cP umfasst; und
b) Gewinnen des Copolyetherglycols aus dem Polymerisationsprodukt,
wobei mittleres Molekulargewicht und molarer Einbau von Alkylenoxid mit ¹H-NMR gemäß ASTM D 4875 gemessen werden, und Viskosität unter Verwendung von ASTM D 4878 bei 40 °C bestimmt wird; und wobei das Copolyetherglycol ein Copolymer aus Tetrahydrofuran und mindestens einem Alkylenoxid ist.

2. Kontinuierliches Verfahren nach Anspruch 1 zur Herstellung von Poly(tetramethylen-co-ethylenether)glycol mit einer hohen molaren Konzentration an Ethylenoxid von mindestens 50 Mol-%, einem mittleren Molekulargewicht von 650 Dalton bis 4.000 Dalton und einer Viskosität von 80 cP bis 4000 cP, umfassend die Schritte:
a) Polymerisieren von 15 bis 90 Teilen Einsatzmaterial, das von 30 bis 70 Gew.-% Tetrahydrofuran und von 20 bis 50 Gew.-% Ethylenoxid umfasst; in Gegenwart von 0,1 bis 5 Gew.-% mindestens einer Verbindung, die reaktive Wasserstoffatome enthält, ausgewählt aus der Gruppe bestehend aus Wasser, Ethylenglycol, 1,4-Butandiol, Poly(tetramethylenoxid)glycol mit einem Molekulargewicht von 130 Dalton bis 400 Dalton, Copolyetherglycol mit einem Molekulargewicht von 130 Dalton bis 400 Dalton und Kombinationen davon; von mehr als 10 bis 40 Gew.-% inerten Verdünnungsmittels oder Lösungsmittels, ausgewählt aus der Gruppe bestehend aus linearen oder verzweigten kurzkettigen Kohlenwasserstoffen mit 5 bis 8 Kohlenstoffatomen, cyclischen Kohlenwasserstoffen mit 5 bis 8 Kohlenstoffatomen, stabilen Oxygenaten, substituierten oder unsubstituierten aromatischen Kohlenwasserstoffen und Kombinationen davon, wobei das Verdünnungsmittel oder Lösungsmittel einen Siedepunkt von 40 °C bis 150 °C aufweist; und eines sauren Katalysators bei einer Temperatur von 30 °C bis 80 °C, um ein Polymerisationsprodukt herzustellen, das Poly(tetramethylen-co-ethylenether)glycol mit einem hohen molaren Einbau von Ethylenoxid von mindestens 50 Mol-%, einem mittleren Molekulargewicht von 650 Dalton bis 4.000 Dalton und einer Viskosität von 80 cP bis 4000 cP umfasst; und
b) Gewinnen des Poly(tetramethylen-co-ethylenether)glycols aus dem Polymerisationsprodukt.

3. Kontinuierliches Verfahren zur Herstellung von Copolyetherglycol mit einer hohen molaren Konzentration an Alkylenoxid von mindestens 50 Mol-%, einem mittleren Molekulargewicht von 650 Dalton bis 4.000 Dalton und einer Viskosität von 80 cP bis 4000 cP, umfassend die Schritte:
a') Polymerisieren von 15 bis 90 Teilen Einsatzmaterial, das von 10 bis 90 Gew.-% Tetrahydrofuran und von 10 bis 90 Gew.-% mindestens eines Alkylenoxids umfasst, in Gegenwart von 0,1 bis 5 Gew.-% mindestens einer Verbindung, die reaktive Wasserstoffatome enthält, von 10 bis 40 Gew.-% inerten Verdünnungsmittels oder Lösungsmittels mit einem Siedepunkt von 40 °C bis 150 °C, und eines sauren Katalysators bei einer Temperatur von 30 °C bis 80 °C, um ein Polymerisationsprodukt herzustellen, das oligomere zyklische Ether (OCE), Copolyetherglycol mit einem hohen molaren Einbau von Alkylenoxid von mindestens 50 Mol-%, einem mittleren Molekulargewicht von 650 Dalton bis 4.000 Dalton und einer Viskosität von 80 cP bis 4000 cP, mindestens ein Dimer des Alkylenoxids, lineares kurzkettiges Copolyetherglycol und Tetrahydrofuran umfasst;
b') Abtrennen eines Hauptanteils des Tetrahydrofurans und des Dimers des Alkylenoxids aus dem Polymerisationsproduktgemisch aus Schritt a'), um ein rohes Produktgemisch herzustellen, das oligomere zyklische Ether (OCE), Copolyetherglycol mit einem hohen molaren Einbau von Alkylenoxid von mindestens 50 Mol-%, einem mittleren Molekulargewicht von 650 Dalton bis 4.000 Dalton und einer Viskosität von 80 cP bis 4000 cP und lineares kurzkettige Copolyetherglycol umfasst;
c') Abtrennen mindestens eines Teils der oligomeren zyklischen Ether (OCE) und des linearen kurzkettigen Copolyetherglycols aus dem rohen Produktgemisch der Stufe b'), um einen Strom von oligomeren zyklischen Ethern (OCE), der oligomere zyklische Ether (OCE)und lineares kurzkettiges Copolyetherglycol umfasst, und einen Produktstrom, der Copolyetherglycol mit einem hohen molaren Einbau von Alkylenoxid von mindestens 50 Mol-%, einem mittleren Molekulargewicht von 650 Dalton bis 4.000 Dalton und einer Viskosität von 80 cP bis 4000 cP umfasst, herzustellen;
und
d') optionales Rückführen mindestens eines Teils des Stroms aus oligomeren zyklischen Ethern (OCE) aus Schritt c') in die Polymerisationsstufe a`);
wobei mittleres Molekulargewicht und molarer Einbau von Alkylenoxid mit ¹H-NMR gemäß ASTM D 4875 gemessen werden, und Viskosität unter Verwendung von ASTM D 4878 bei 40 °C bestimmt wird; und wobei das Copolyetherglycol ein Copolymer aus Tetrahydrofuran und mindestens einem Alkylenoxid ist, und wobei der Begriff oligomere zyklische Ether (OCE) das Dimere des Alkylenoxids-Comonomers, das in der Polymerisation eingesetzt wurde, ausschließt.

4. Verfahren nach Anspruch 1 oder Anspruch 3, wobei das Alkylenoxid aus der Gruppe bestehend aus Ethylenoxid; 1,2-Propylenoxid; 1,3-Propylenoxid; 1,2-Butylenoxid; 2,3-Butylenoxid; 1,3-Butylenoxid; und Kombinationen davon ausgewählt ist.

5. Verfahren nach Anspruch 1 oder Anspruch 3, wobei die Verbindung, die reaktive Wasserstoffatome enthält, aus der Gruppe bestehend aus Wasser, Ethylenglycol, 1,4-Butandiol, Poly(tetramethylenether)glycol mit einem Molekulargewicht von 130 Dalton bis 400 Dalton, Copolyetherglycol mit einem Molekulargewicht von 130 Dalton bis 400 Dalton und Kombinationen davon ausgewählt ist.

6. Verfahren nach Anspruch 1, wobei der Säurekatalysator aus der Gruppe bestehend aus gegebenenfalls durch Säurebehandlung aktivierten Zeolithen, Sulfat-dotiertem Zirkoniumdioxid, Trägerkatalysatoren, die mindestens eine katalytisch aktive sauerstoffhaltige Molybdän- oder Wolframverbindung umfassen oder einem Gemisch aus solchen Verbindungen, das auf einem oxidischen Träger aufgebracht ist, polymeren Katalysatoren, die Sulfonsäuregruppen enthalten, und Kombinationen davon ausgewählt ist.

7. Verfahren nach Anspruch 6, wobei der polymere Katalysator ein Perfluorsulfonsäure-Harz umfasst.

8. Verfahren nach Anspruch 1 oder Anspruch 3, wobei das Tetrahydrofuran ferner zumindest ein Alkyltetrahydrofuran, ausgewählt aus der Gruppe bestehend aus 2-Methyltetrahydrofuran, 3-Methyltetrahydrofuran, 3-Ethyltetrahydrofuran und Kombinationen davon, umfasst.

9. Verfahren nach Anspruch 1 oder Anspruch 3, wobei das Verdünnungsmittel oder Lösungsmittel aus der Gruppe bestehend aus einem oder einer Kombination aus linearen oder verzweigten kurzkettigen Kohlenwasserstoffen mit 5 bis 8 Kohlenstoffatomen, zyklischen Kohlenwasserstoffen mit 5 bis 8 Kohlenstoffatomen, stabilen Oxygenaten und substituierten und unsubstituierten aromatischen Kohlenwasserstoffen ausgewählt ist, wobei das Verdünnungsmittel oder Lösungsmittel einen Siedepunkt von 40 °C bis 150 °C aufweist.

10. Verfahren nach Anspruch 9, wobei das Verdünnungsmittel oder Lösungsmittel Hexan, Heptan, Cyclohexan, 1,4-Dioxan, Toluol, Xylol oder Kombinationen davon umfasst.

11. Verfahren nach Anspruch 1, wobei der Polymerisationsschritt a) in einem kontinuierlich gerührten Tankreaktor durchgeführt wird.

12. Verfahren nach Anspruch 11, wobei der Säurekatalysator einen polymeren Katalysator, der Sulfonsäuregruppen enthält, umfasst.

13. Verfahren nach Anspruch 2, wobei der Polymerisationsschritt a) in einem kontinuierlich gerührten Tankreaktor durchgeführt wird.

14. Verfahren nach Anspruch 3, wobei der Polymerisationsschritt a') in einem kontinuierlich gerührten Tankreaktor durchgeführt wird.

15. Verfahren nach Anspruch 2 oder Anspruch 14, wobei der Säurekatalysator ein polymerer Katalysator ist, der Sulfonsäuregruppen enthält.

16. Verfahren nach Anspruch 15, wobei der polymere Katalysator ein Perfluorsulfonsäure-Harz umfasst.

17. Verfahren nach Anspruch 3, wobei der Säurekatalysator aus der Gruppe bestehend aus gegebenenfalls durch Säurebehandlung aktivierten Zeolithen, Sulfat-dotiertem Zirkoniumdioxid, Trägerkatalysatoren, die mindestens eine katalytisch aktive sauerstoffhaltige Molybdän- oder Wolframverbindung umfassen oder ein Gemisch aus solchen Verbindungen, das auf einem oxidischen Träger aufgebracht ist, polymeren Katalysatoren, die Sulfonsäuregruppen enthalten, und Kombinationen davon ausgewählt ist.

18. Verfahren nach Anspruch 3, ferner umfassend Filtern des Polymerisationsproduktgemisches aus Schritt a') vor Schritt b'), und Filtern des rohen Produktgemisches aus Schritt b') vor Schritt c').

19. Verfahren nach Anspruch 3, wobei das Alkylenoxid Ethylenoxid umfasst und das Dimer des Alkylenoxids 1,4-Dioxan umfasst.

20. Verfahren nach Anspruch 3, ferner umfassend Abtrennen mindestens eines Teils des Dimers des in Schritt b') erhaltenen Alkylenoxids von dem in Schritt b') erhaltenen Tetrahydrofuran, und gegebenenfalls Rückführen mindestens eines Teils des so erhaltenen Tetrahydrofurans in Polymerisationsschritt a').

## Revendications

1. Procédé continu de fabrication de copolyéther de glycol ayant une incorporation molaire élevée d'oxyde d'alkylène d'au moins environ 50% molaire, un poids moyen moléculaire de 650 daltons à 4000 daltons et une viscosité de 80 cP à 4000 cP comprenant les étapes suivantes:
a) polymériser de 15 à 90 parts de matière première comprenant de 10 à 90 % en poids de tétrahydrofurane et de 10 à 90 % en poids d'au moins un oxyde d'alkylène, en présence de 0.1 à 5% en poids d'au moins un composé contenant des atomes d'hydrogène réactifs, de 10 à 40% en poids de diluant ou solvant ayant un point d'ébullition de 40°C à 150°C, et un catalyseur acide, à une température de 30°C à 80°C, pour produire un produit de polymérisation comprenant un copolyéther glycol ayant une incorporation molaire élevée d'oxyde d'alkylène d'au moins 50% molaire, un poids moléculaire moyen de 650 daltons à 4000 daltons et une viscosité de 80 cP à 4000 cP; et
b) récupérer le copolyéther glycol à partir du produit de polymérisation,
dans lequel le poids moléculaire moyen et l'incorporation molaire d'oxyde d'alkylène sont mesurés par ¹H NMR selon ASTM D 4875 et la viscosité est déterminée en utilisant ASTM D 4878 à 40°C; et dans lequel ledit copolyéther glycol est un copolymère de tétrahydrofurane et au moins un oxyde d'alkylène.

2. Procédé continu selon la revendication 1 pour la fabrication du poly(tétraméthylène-co-éthylène-éther) glycol ayant une concentration molaire élevée d'oxyde d'éthylène d'au moins 50% molaire, un poids moléculaire moyen de 650 daltons à 4000 daltons et une viscosité de 80 cP à 4000 cP comprenant les étapes suivantes:
a) polymériser de 15 à 90 parts de matière première comprenant de 30 à 70 % en poids de tétrahydrofurane et de 20 à 50 % en poids d'oxyde d'éthylène; en présence de 0.1 à 5% en poids d'au moins un composé contenant des atomes d'hydrogène réactifs sélectionnés parmi un groupe composé en eau, glycol d'éthylène, 1,4-butanediol, poly(tétraméthylène-éther) glycol ayant un poids moléculaire de 130 daltons à 400 daltons, copolyéther glycol ayant un poids moléculaire de 130 daltons à 400 daltons et combinaisons de ceux-ci; de plus de 10 à 40 % en poids de diluant inerte ou solvant sélectionné parmi un groupe consistant en une chaîne d'hydrocarbures courte linéaire ou ramifiée de 5 à 8 atomes de carbone, hydrocarbures cycliques de 5 à 8 atomes de carbone, composés oxygénés stables, hydrocarbures aromatiques substitués ou non substitués, et combinaisons de ceux-ci, ledit diluant ou solvant ayant un point d'ébullition de 40°C à 150°C; et un catalyseur acide à une température de 30°C à 80°C pour produire un produit de polymérisation comprenant du poly(tétraméthylène-co-éthylène-éther) glycol ayant une incorporation molaire élevée d'oxyde d'éthylène d'au moins 50% molaire, un poids moléculaire moyen de 650 daltons à 4000 daltons et une viscosité de 80 cP à 4000 cP; et
b) récupérer le poly(tétraméthylène-co-éthylène-éther) glycol à partir du produit de polymérisation.

3. Procédé continu pour la fabrication du copolyéther glycol ayant une incorporation molaire élevée d'oxyde d'alkylène d'au moins 50% molaire, un poids moléculaire moyen de 650 daltons à 4000 daltons et une viscosité de 80 cP à 4000 cP comprenant les étapes suivantes:
a') polymériser de 15 à 90 parts de matière première comprenant de 10 à 90 % en poids de tétrahydrofurane et 10 à 90 % en poids d'au moins un oxyde d'alkylène, en présence de 0.1 à 5 % en poids d'au moins un composé contenant des atomes d'hydrogène réactifs, de 10 à 40 % en poids de diluant ou solvant inerte ayant un point d'ébullition de 40°C à 150°C, et un catalyseur acide à une température de 30°C à 80°C pour produire un mélange de produit de polymérisation comprenant des éthers oligomériques cycliques (OCE), copolyéther glycol ayant une incorporation molaire élevée d'oxyde d'alkylène d'au moins 50% molaire, un poids moléculaire moyen de 650 daltons à 4000 daltons et une viscosité d'environ 80 cP à 4000 cP, au moins un dimère d'oxyde d'alkylène, copolyéther glycol à chaîne courte linéaire et tétrahydrofurane;
b') séparer une majorité du tétrahydrofurane et le dimère de l'oxyde d'alkylène du mélange de produit de polymérisation de l'étape a') pour produire un mélange de produit brut comprenant des éthers oligomériques cycliques (OCE), copolyéther glycol ayant une incorporation molaire élevée d'oxyde d'alkylène d'au moins 50% molaire, un poids moléculaire moyen de 650 daltons à 4000 daltons et une viscosité de 80 cP à 4000 cP, et un copolyéther glycol à chaîne courte linéaire;
c') séparer au moins une portion d'éthers oligomériques cycliques (OCE) et un copolyéther glycol à chaîne courte linéaire à partir d'un mélange de produit brut de l'étape b') pour produire un flux d'éthers oligomériques cycliques (OCE) comprenant des éthers oligomériques cycliques (OCE) et un copolyéther glycol de chaîne courte linéaire, et un flux de produit comprenant du copolyéther glycol ayant une incorporation molaire élevée d'oxyde d'alkylène d'au moins 50% molaire, un poids moléculaire moyen de 650 daltons à 4000 daltons et une viscosité de 80 cP à 4000 cP; et
d') facultativement recycler au moins une portion de flux d'éthers oligomériques cycliques (OCE) de l'étape c') à l'étape a') de polymérisation ;
dans lequel le poids moléculaire moyen et l'incorporation molaire d'oxyde d'alkylène sont mesurés par ¹H NMR selon ASTM D 4875 et la viscosité est déterminée en utilisant ASTM D 4878 à 40°C; et dans lequel ledit copolyéther glycol est un copolymère de tétrahydrofurane et au moins un oxyde d'alkylène, et dans lequel le terme éthers oligomériques cycliques (OCE) exclut le dimère du co-monomère de oxyde d'alkylène utilisé dans la polymérisation.

4. Procédé de la revendication 1 ou la revendication 3 dans lequel l'oxyde d'alkylène est sélectionné parmi le groupe consistant en oxyde d'éthylène; oxyde de 1,2-propylène; oxyde de 1,3-propylène; oxyde de 1,2-butylène; oxyde de 2,3-butylène; oxyde de 1,3-butylène; et combinaisons de ceux-ci.

5. Procédé de la revendication 1 ou de la revendication 3 dans lequel le composé contenant les atomes d'hydrogène réactifs est sélectionné parmi le groupe consistant en eau, glycol d'éthylène, 1,4-butanediol, poly(tétraméthylène-éther) glycol ayant un poids moléculaire de 130 daltons à 400 daltons, copolyéther glycol ayant un poids moléculaire de 130 daltons à 400 daltons, et combinaisons de ceux-ci.

6. Procédé de la revendication 1 dans lequel le catalyseur acide est sélectionné parmi le groupe consistant en zéolites facultativement activés par un traitement acide, dioxyde de zirconium dopé au sulfate, catalyseurs supportés comprenant au moins un composé de tungstène ou molybdène oxygéné catalytiquement actif ou un mélange de tels composés appliqués à un support oxydique, catalyseurs polymériques qui contiennent des groupes d'acide sulfonique, et combinaisons de ceux-ci.

7. Procédé de la revendication 6 dans lequel le catalyseur polymérique comprend une résine d'acide perfluorosulfonique.

8. Procédé de la revendication 1 ou de la revendication 3 dans lequel le tétrahydrofurane comprend en outre au moins un alkyltétrahydrofurane sélectionné parmi le groupe consistant en 2-méthyltétrahydrofurane, 3-méthyltétrahydrofurane, 3-éthyltétrahydrofurane et combinaisons de ceux-ci.

9. Procédé de la revendication 1 ou de la revendication 3 dans lequel le diluant ou solvant est sélectionné parmi le groupe consistant en une ou une combinaison d'hydrocarbures à chaîne courte linéaire ou ramifiée de 5 à 8 atomes de carbone, hydrocarbures cycliques de 5 à 8 atomes de carbones, composés oxygénés stables et hydrocarbures aromatiques substitués ou non-substitués, ledit diluant ou solvant ayant un point d'ébullition de 40°C à 150°C.

10. Procédé de la revendication 9 dans lequel le diluant ou le solvant comprend hexane, heptane, cyclohexane, 1,4-dioxane, toluène, xylène ou combinaisons de ceux-ci.

11. Procédé de la revendication 1 dans lequel l'étape a) de polymérisation est réalisée dans un réacteur à cuve agité continuellement.

12. Procédé de la revendication 11 dans lequel le catalyseur acide comprend un catalyseur polymérique qui contient des groupes d'acide sulfonique.

13. Procédé de la revendication 2 dans lequel l'étape a) de polymérisation est réalisée dans un réacteur à cuve agité continuellement.

14. Procédé de la revendication 3 dans lequel l'étape a') de polymérisation est réalisée dans un réacteur à cuve agité continuellement.

15. Procédé de la revendication 2 ou de la revendication 14 dans lequel le catalyseur acide est un catalyseur polymérique qui contient des groupes d'acide sulfonique.

16. Procédé de la revendication 15 dans lequel le catalyseur polymérique comprend une résine d'acide perfluorosulfonique.

17. Procédé de la revendication 3 dans lequel le catalyseur acide est sélectionné à partir d'un groupe consistant en des zéolites facultativement activés par un traitement acide, dioxyde de zirconium dopé au sulfate, catalyseurs supportés comprenant au moins un composé de tungstène ou molybdène oxygéné catalytiquement actif ou un mélange de tels composés appliqués à un support oxydique, catalyseurs polymériques qui contiennent des groupes d'acide sulfonique, et combinaisons de ceux-ci.

18. Procédé de la revendication 3 comprenant en outre la filtration du mélange de produit de polymérisation de l'étape a') avant l'étape b'), et la filtration du mélange de produit brut de l'étape b') avant l'étape c').

19. Procédé de la revendication 3 dans lequel l'oxyde d'alkylène comprend oxyde d'éthylène et le dimère de l'oxyde d'alkylène comprend 1,4-dioxane.

20. Procédé de la revendication 3 comprenant en outre la séparation d'au moins une portion du dimère de l'oxyde d'alkylène obtenu à l'étape b') du tétrahydrofurane obtenu à l'étape b'), et facultativement le recyclage a l'étape de polymérisation a') au moins une portion du tétrahydrofurane ainsi obtenu.
